# EUROPÄISCHE PATENTSCHRIFT

(11) **EP 1 575 811 B1**
(45) Veröffentlichungstag und Bekanntmachung des Hinweises auf die Patenterteilung: **05.03.2014**
(21) Anmeldenummer: 03797948.1
(22) Anmeldetag: 11.06.2003
(51) Int. Cl.: B60S 1/08, B60S 1/24

(54) **SCHEIBENWISCHVORRICHTUNG, INSBESONDERE FÜR EIN KRAFTFAHRZEUG**
WINDSCREEN WIPER DEVICE, IN PARTICULAR FOR A MOTOR VEHICLE
DISPOSITIF ESSUIE-GLACE, EN PARTICULIER POUR UN VEHICULE AUTOMOBILE

(30) Priorität: 10.12.2002 DE 10257558
(43) Veröffentlichungstag der Anmeldung: 21.09.2005
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2003/001935
(87) Internationale Veröffentlichungsnummer: WO 2004/052699

(56) Entgegenhaltungen:
- EP-A- 1 029 758
- EP-A- 1 106 454
- DE-A- 1 755 627
- DE-A- 19 949 443
- DE-A- 19 949 446
- FR-A- 2 708 543
- PATENT ABSTRACTS OF JAPAN vol. 2003, no. 03, 5. Mai 2003 (2003-05-05) & JP 2002 331915 A (MITSUBA CORP;HONDA MOTOR CO LTD), 19. November 2002 (2002-11-19)
- PATENT ABSTRACTS OF JAPAN vol. 008, no. 028 (M-274), 7. Februar 1984 (1984-02-07) & JP 58 185354 A (KOMAO YONEMORI), 29. Oktober 1983 (1983-10-29)

## Beschreibung

### Stand der Technik

Die Erfindung betrifft eine Scheibenwischvorrichtung, insbesondere für ein Kraftfahrzeug, nach Gattung des unabhängigen Anspruchs.

Es sind schon zahlreiche Scheibenwischvorrichtungen bekannt, die zwei Wischerarme aufweisen, die über jeweils ein freies Ende verfügen, an denen jeweils ein Wischblatt angelenkt ist. Die Scheibenwischvorrichtung ist dabei derart ausgebildet, dass im Betrieb die Wischblätter zwischen mindestens zwei Umkehrlagen zu pendeln vermögen. Eine derartige Wischvorrichtung ist beispielsweise in der DE 100 13 256 A1 gezeigt. Die Wischblätter sind von im wesentlichen länglicher Gestalt und in bezug auf ihre Längserstreckung etwa mittig mit einem Wischerarm verbunden, der sie pendelnd über eine Scheibe führt. Die Wischerarme sind im Verhältnis zur Scheibe spiegelsymmetrisch angeordnet, wobei die Symmetrieachse etwa durch die Mitte der sichtbaren Scheibenebene verläuft.

Problematisch ist hierbei, dass die Scheibenwischer sowohl in ihrer unteren Umkehrlage wie auch in der Parklage relativ hoch in das Sichtfeld des Fahrers hineinragen und somit das Sichtfeld des Fahrers verkleinern

Die JP 2002 331915 beschreibt eine als Gegenlaufanlage ausgebildete Scheibenwischvorrichtung, bei der die Wischarme in einer Parkposition gekreuzt in einer Ausnehmung unter einer Motorhaube angeordnet sind.

Die DE 19 949 443 A1 offenbart eine Scheibenwischvorrichtung nach dem Oberbegriff des Anspruchs 1.

### Vorteile der Erfindung

Die erfindungsgemäße Scheibenwischvorrichtung mit den Merkmalen des Hauptanspruchs hat den Vorteil, dass in einer der Stillstandlagen, ein Wischblatt unter den Wischerarm des anderen Wischblattes zu schlüpfen vermag und somit in diesen Stillstandslagen das Sichtfeld des Fahrers weniger beeinträchtigen. Weiterhin ergibt sich auf diese Weise ein verbessertes Strömungsverhalten, da die Gesamtangriffsfläche des Fahrwindes vermindert wird.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist hierbei, wenn die Umkehrlagen Stillstandslagen bilden, da auf diese Weise auch im Betrieb der Scheibenwischvorrichtung, regelmäßig ein optimales Sichtfeld gewährleistet ist.

Weiterhin ist vorteilhaft, wenn eine Parklage vorgesehen ist, in der die Wischerarme angeordnet sind, wenn die Scheibenwischvorrichtung nicht in Betrieb ist und diese eine Stillstandslage bildet. Auf diese Weise können die Wischerarme und Wischblätter noch besser unter der Motorhaube versteckt werden, wodurch die Aerodynamik des Kraftfahrzeugs verbessert wird.

Hierbei ist es besonders vorteilhaft, wenn ein Wischerarm, bezogen auf die Ebene seiner Pendelbewegung, seitlich von seinem zugehörigen Wischblatt angeordnet ist, so dass unter dem Wischerarm genügend Raum zur Aufnahme des Wischblattes des anderen Wischerarms vorgesehen ist.

Erfindungsgemäß ist ein Wischblatt in Bewegungsrichtung vor seinem zugehörigen Wischerarm und das andere Wischblatt in Bewegungsrichtung vor seinem zugehörigen Wischerarm und das andere Wischblatt in Bewegungsrichtung hinter seinem zugehörigen Wischerarm angeordnet, so ergänzen sich die Wischerarme derart, dass eine optimale Packdichte der Wischerarme und Wischblätter und damit ein großes Sichtfeld für den Fahrer erreicht wird.

Umfaßt die Pendelbewegung eine Auf- und Abwärtsbewegung, so ist es besonders vorteilhaft, wenn das fahrerseitige Wischblatt in Bewegungsrichtung vor dem beifahrerseitigen Wischblatt angeordnet ist. Auf diese Weise kann auch bei einem Ausfall der Bewegung des beifahrerseitigen Wischblattes immer noch ein ausreichendes Sichtfeld für den Fahrer des Kraftfahrzeugs erzielt werden, da das Bewegungsfeld des fahrerseitigen Wischblatts nicht beeinträchtigt ist.

Darüber hinaus ist es als vorteilhaft anzusehen, wenn die Pendelbewegung eine Aufwärts- und Abwärtsbewegung umfasst und das fahrerseitige Wischblatt bei einer Aufwärtsbewegung vor seinem zugehörigen Wischerarm angeordnet ist. So kann das beifahrerseitige Wischblatt unter den Wischerarm des fahrerseitigen Wischblattes schlüpfen.

Eine besonders schöne und zweckmäßige Ausbildung wird dadurch erzielt, dass der erste Wischerarm im Wesentlichen punktsymmetrisch zum zweiten Wischerarm angeordnet ist, da auf diese Weise die Anzahl der unterschiedlichen Bauelemente für Rechts- und Linkslenkeranlagen reduziert wird.

Weiterhin ist es vorteilhaft, wenn die Scheibenwischvorrichtung als Gegenlaufanlage ausgebildet ist, um große Windschutzscheiben wischen zu können.

Weiterhin vorteilhaft ist es, wenn die Scheibenwischvorrichtung als Gleichlaufanlage ausgebildet ist, da diese wenig Bauraum beansprucht.

Hierbei ist es vorteilhaft, wenn die Gleichlaufanlage mit einer Hubsteuerung versehen ist, so dass große Wischfelder erzielt werden und trotzdem nur wenig Bauraum beansprucht wird.

### Zeinchnungen

Ausführungsbeispiele der Erfindung sind in den Zeichnungen dargestellt und in der nachfolgenden Beschreibung näher erläutert.

Es zeigen:
Figur 1 eine schematische Darstellung einer nicht zur Erfindung gehörenden Scheibenwischvorrichtung in der Parklage,
Figur 2 einen Schnitt durch die Scheibenwischvorrichtung aus Figur 1,
Figur 3a eine schematische Darstellung einer erfindungsgemäßen Scheibenwischvorrichtung einer Linkslenkeranläge und
Figur 3b eine schematische Darstellung einer Scheibenwischvorrichtung aus Figur 3a, jedoch mit einer Rechtslenkeranlage.

### Beschreibung der Ausführungsbeispiele

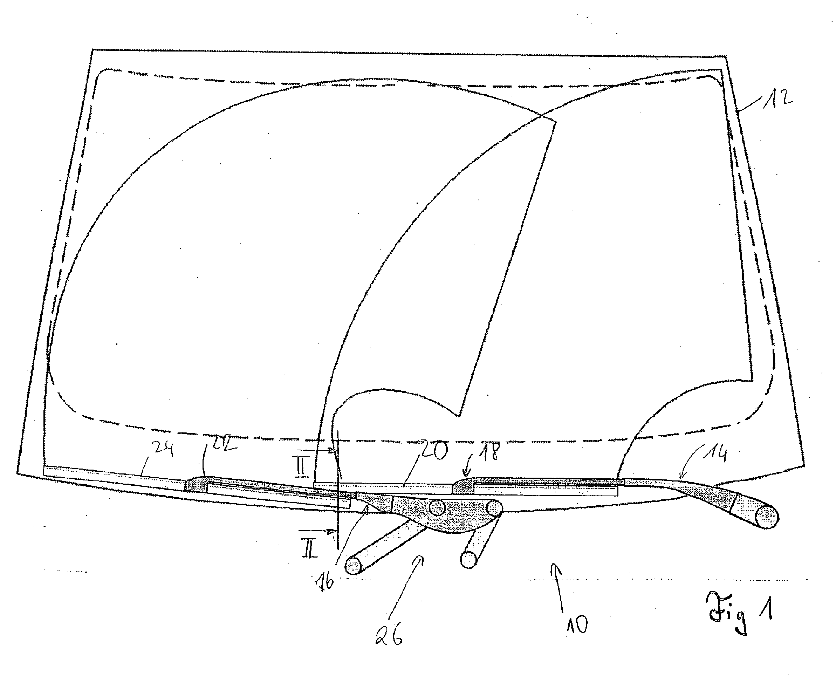

In Figur 1 ist eine erfindungsgemäße Scheibenwischvorrichtung 10 auf einer Windschutzscheibe 12 eines Kraftfahrzeuges in schematischer Darstellung gezeigt. Die Scheibenwischvorrichtung 10 weist einen fahrerseitigen ersten Wischerarm 14 und einen beifahrerseitigen zweiten Wischerarm 16 auf, welche sich im Betrieb pendelnd über die Scheibe 12 zu bewegen vermögen. Die Wischerarme 14, 16 befinden sich hier in der unteren Umkehrlage. Prinzipiell können sie aber auch in einer Parklage, die von ihnen eingenommen wird, wenn die Scheibenwischvorrichtung 10 nicht in Betrieb ist, in dieser Stellung angeordnet sein; die weiteren Ausführung gelten hierfür identisch.

Der erste Wischerarm 14 weist an seiner der Pendelachse abgewandten Seite ein erstes freies Ende 18 auf, an dem ein erstes Wischblatt 20 angelenkt ist. Das erste Wischblatt 20 ist hierbei als sogenanntes gelenkloses Wischblatt ausgebildet, wie dies beispielsweise in der DE 196 30 510 A1 beschrieben ist. Ebenso weist der zweite Wischerarm 16 ein zweites freies Ende 22 auf, an dem ein zweites Wischblatt 24 angelenkt ist. Auch dieses ist als gelenkloses Wischblatt ausgebildet. Die Wischfelder, die durch die im Betrieb von den Wischblättern 20, 24 auf der Scheibe 12 überstrichene Fläche gebildet ist, der beiden Wischblätter 20, 24 überlappen sich.

Sowohl der erste Wischerarm 14 wie auch der zweite Wischerarm 16 erstrecken sich in der Ebene ihrer Pendelbewegung seitlich von ihrem jeweils zugehörigen Wischblatt 20, 24 und im Wesentlichen parallel zu demselben. Ob die Anlenkung des Wischerarms 14, 16 am freien Ende 18, 22 mit dem jeweiligen Wischblatt 20, 24 seitlich oder von oben, also von der der Scheibe 12 abgewandten Seite des Wischblattes 20, 24 aus erfolgt, ist hierbei prinzipiell unerheblich, jedoch durch eine seitliche Anlenkung die Bauhöhe des Wischblattes 20, 24 reduziert werden.

Die Wischblätter 20, 24 sind hier in ihrer unteren Umkehrlage gezeigt. In dieser unteren Umkehrlage ist ein Teil des ersten Wischblattes 20 auf der der Scheibe 12 zugewandten Seite des zweiten Wischerarms 16 angeordnet. Auf diese Weise ist das erste Wischblatt 20 unter den zweiten Wischerarm 16 geschlüpft, so dass die Scheibenwischvorrichtung 10 in ihrer räumlichen Ausdehnung reduziert ist.

Bei der hier gezeigten Scheibenwischvorrichtung 10 handelt es sich um eine Gleichlaufanlage mit Hubsteuerung, die sich von einer Gegenlaufanlage dadurch unterscheidet, dass die Wischerarme 14, 16 sich im wesentlichen in die gleiche Richtung bewegen, also bei einer Aufwärtswischbewegung sich beide im Uhrzeigersinn bewegen. Zur Vergrößerung des Wischfeldes weist der zweite Wischerarm 16 eine Hubsteuerung 26 auf, welche durch ein sog. Viergelenk gegeben ist. Diese vergrößert das Wischfeld indem der Pendelbewegung des Wischerarms 16 noch eine Hubbewegung überlagert ist.

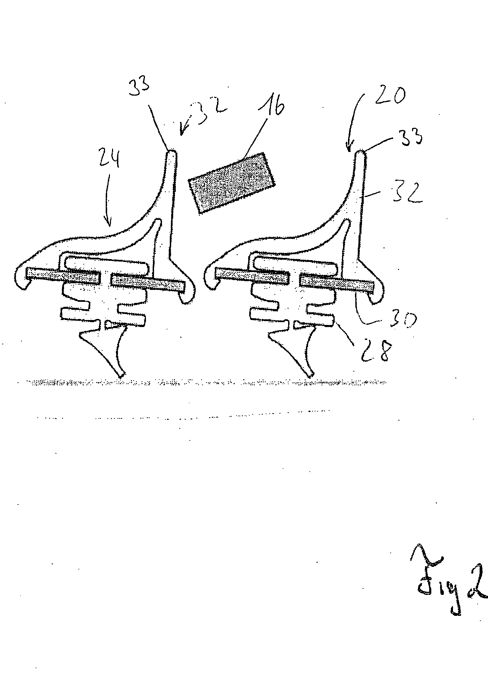

In Figur 2 ist der Ausschnitt aus Figur 1 in einem Querschnitt gezeigt. Wie bereits beschrieben, sind die Wischblätter 20, 24 als sog. gelenklose Wischblätter ausgebildet, welche im Wesentlichen lediglich aus einem Wischgummi 28, einer Federschiene 30 und eventuell aus einem Spoiler 32 bestehen, wobei auf ein Tragbügelgestell, wie bei herkömmlichen Wischblättern üblich, verzichtet wird. Das erste Wischblatt 20, oder genauer, das Wischgummi 28 des ersten Wischblattes 20 ist unter den Wischerarm 16 des zweiten Wischblatts 24 geschlüpft. Der Spoiler 32 des zweiten Wischblattes 24 ist hierbei so angeordnet, dass seine Abrisskante 33 auf der Seite angeordnet ist, die dem zugehörigen Wischerarm des jeweiligen Wischblattes 20, 24 zugewandt ist. Der Wischerarm 16 ist hierbei so niedrig über der Scheibe 12 angeordnet, daß es die Abrißkante 33 des Spoilers, bezogen auf eine durch die Scheibe 12 gebildete Ebene, nicht wesentlich überragt, oder eine durch die Abrißkanten 33 der beiden Wischblätter 20, 24 gebildete Ebene nicht wesentlich überragt.

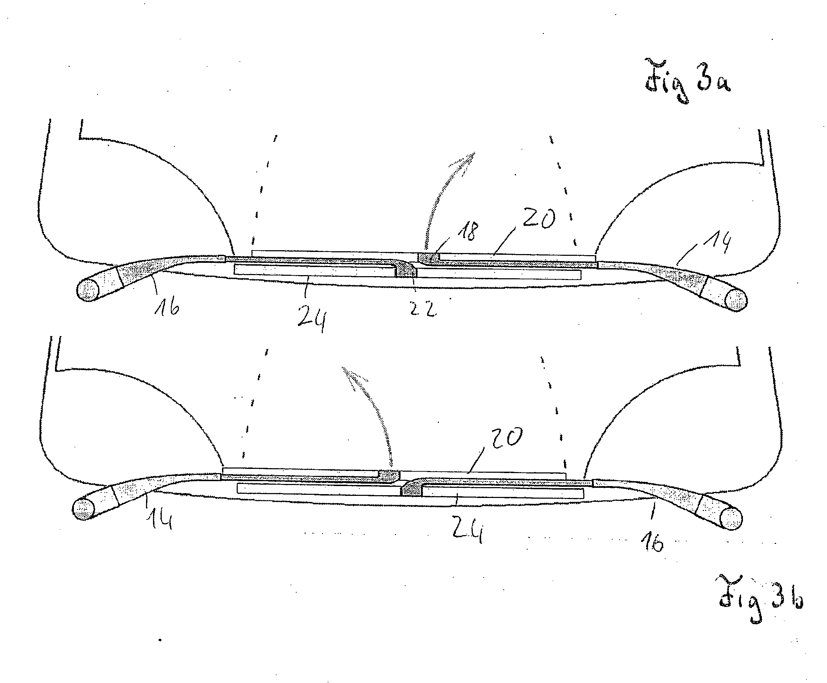

In Figur 3a ist eine erfindungsgemäße Variation der Scheibenwischvorrichtung aus Figur 1 gezeigt.

Hierbei handelt es sich um eine sog. Gegenlaufanläge, bei der sich die beiden Wischerarme 14, 16 im Betrieb gegensinnig bewegen, also bei einer Aufwärtsbewegung der erste Wischerarm 14 im Uhrzeigersinn und der zweite Wischerarm 16 sich gegen den Uhrzeigersinn bewegt. Typischerweise ist das Wischblatt 20, das sich bei einer Aufwärtspendelbewegung vor dem anderen Wischblatt 24 befindet auf der Fahrerseite angeordnet und wischt das fahrerseitige Wischfeld. Auch hier schlüpft das fahrerseitige erste Wischblatt 20 unter den beifahrerseitigen zweiten Wischerarm 16, so dass ein gefälliges Aussehen und eine optimale Packungsdichte erreicht wird. Darüber hinaus sind die beiden Wischerarme 14, 16 im Bereich ihrer freien Enden 18, 22 punktsymmetrisch zueinander angeordnet und entsprechend ausgebildet. Der Wischgummi 28 des fahrerseitigen ersten Wischblattes 20 ist hier in weiten Teilen unter dem zweiten Wischerarm 16 des beifahrerseitigen zweiten Wischblatts 24 angeordnet.

In Figur 3b ist die Scheibenwischvorrichtung 10 aus Figur 3a jedoch für eine Rechtslenkeranlage, bei der die Fahrerseite des Kraftfahrzeuges auf der rechten Seite angeordnet ist, wie dies beispielsweise in England, Südafrika oder Australien der Fall ist. Diese Scheibenwischvorrichtung 10 ist symmetrisch zur Scheibenwischvorrichtung 10 aus Figur 3a ausgebildet, so dass wiederum das fahrerseitige erste Wischblatt 20 bei einer Aufwärtswischbewegung des ersten Wischerarmes 14 vor dem beifahrerseitigen zweiten Wischblatt 24 angeordnet ist. Auch hier ist der Wischgummi 28 des fahrerseitigen ersten Wischblattes 20 ist in weiten Teilen unter dem zweiten Wischerarm 16 des beifahrerseitigen zweiten Wischblatts 24 angeordnet.

## Patentansprüche

1. Scheibenwischvorrichtung (10), insbesondere für ein Kraftfahrzeug, mit einem ersten
Wischerarm (14) von im wesentlichen länglicher Gestalt, an dem ein erstes Wischblatt (20) anlenkbar ist und einem zweiten Wischerarm (16) von im wesentlichen länglicher Gestalt, an dem ein zweites Wischblatt (24) anlenkbar ist, die im Betrieb zwischen mindestens zwei Umkehrlagen zu pendeln vermögen, wobei Stillstandslagen vorgesehen sind und ein Wischblatt (20,24) zumindest teilweise, in zumindest einer
Stillstandslage, in Richtung senkrecht zu einer Scheibe (12) unter dem Wischerarm (14,16) des anderen Wischblatts (24,20) angeordnet ist,
**dadurch gekennzeichnet,**
**dass** ein Wischblatt (20) in Bewegungsrichtung vor seinem zugehörigen Wischerarm (14) und das andere Wischblatt (24) hinter seinem zugehörigen Wischerarm (16) angeordnet ist.

2. Scheibenwischvorrichtung (10) nach Anspruch 1, **dadurch gekennzeichnet, dass** die mindestens zwei Umkehrlagen Stillstandslagen bilden.

3. Scheibenwischvorrichtung (10) nach Anspruch 1 oder 2, **dadurch gekennzeichnet, dass** mindestens eine Parklage vorgesehen ist die mindestens eine weitere Stillstandslage bildet.

4. Scheibenwischvorrichtung (10) nach einem der vorhergehenden Ansprüche, **dadurch gekennzeichnet, dass** die Pendelbewegung eine Aufwärts-und Abwärtsbewegung umfasst und dass das fahrerseitige Wischblatt (20) bei der Aufwärtsbewegung vor dem beifahrerseitigen Wischblatt (24) angeordnet ist.

5. Scheibenwischvorrichtung (10) nach einem der vorhergehenden Ansprüche, **dadurch gekennzeichnet, dass** die Pendelbewegung eine Aufwärts-und Abwärtsbewegung umfasst und dass das fahrerseitige Wischblatt (20) bei der Aufwärtsbewegung vor seinem zugehörigen Wischerarm (14) angeordnet ist.

6. Scheibenwischvorrichtung (10) nach einem der vorhergehenden Ansprüche, **dadurch gekennzeichnet, dass** in mindestens einer Stillstandslage der erste Wischerarm (14) im wesentlichen punktsymmetrisch zum zweiten Wischerarm (16) angeordnet ist.

7. Scheibenwischvorrichtung (10) nach einem der vorhergehenden Ansprüche, **dadurch gekennzeichnet, dass** die Scheibenwischvorrichtung (10) als Gegenlaufanlage ausgebildet ist.

8. Scheibenwischvorrichtung (10) nach einem der Ansprüche 1 bis 6, **dadurch gekennzeichnet, dass** die Scheibenwischvorrichtung (10) als Gleichlaufanlage ausgebildet ist.

9. Scheibenwischvorrichtung (10) nach Anspruch 8, **dadurch gekennzeichnet, dass** die Gleichlaufanlage mit einer Hubsteuerung (26) versehen ist.

## Claims

1. Windscreen wiper device (10), in particular for a motor vehicle, with a first wiper arm (14) of substantially elongate design, to which a first wiper blade (20) can be coupled, and with a second wiper arm (16) of substantially elongate design, to which a second wiper blade (24) can be coupled, said wiper blades being capable of oscillating between at least two reversing positions during operation, wherein standstill positions are provided, and, in at least one standstill position, one wiper blade (20, 24) is at least partially arranged, in a direction perpendicular to a windscreen (12), under the wiper arm (14, 16) of the other wiper blade (24, 20), **characterized in that** one wiper blade (20) is arranged in front of the associated wiper arm (14) thereof in the direction of movement, and the other wiper blade (24) is arranged behind the associated wiper arm (16) thereof in the direction of movement.

2. Windscreen wiper device (10) according to Claim 1, **characterized in that** the at least two reversing positions form standstill positions.

3. Windscreen wiper device (10) according to Claim 1 or 2, **characterized in that** at least one parking position which forms at least one further standstill position is provided.

4. Windscreen wiper device (10) according to one of the preceding claims, **characterized in that** the oscillating movement comprises an upwards and downwards movement, and **in that**, during the upwards movement, the driver-side wiper blade (20) is arranged in front of the passenger-side wiper blade (24).

5. Windscreen wiper device (10) according to one of the preceding claims, **characterized in that** the oscillating movement comprises an upwards and downwards movement, and **in that**, during the upwards movement, the driver-side wiper blade (20) is arranged in front of the associated wiper arm (14) thereof.

6. Windscreen wiper device (10) according to one of the preceding claims, **characterized in that**, in at least one standstill position, the first wiper arm (14) is arranged substantially point-symmetrically with respect to the second wiper arm (16).

7. Windscreen wiper device (10) according to one of the preceding claims, **characterized in that** the windscreen wiper device (10) is designed as a contra-rotating system.

8. Windscreen wiper device (10) according to one of Claims 1 to 6, **characterized in that** the windscreen wiper device (10) is designed as a co-rotating system.

9. Windscreen wiper device (10) according to Claim 8, **characterized in that** the co-rotating system is provided with a lift controlling means (26).

## Revendications

1. Dispositif d'essuie-glace (10), en particulier pour un véhicule automobile, comprenant un premier bras d'essuie-glace (14) de forme essentiellement allongée, sur lequel peut être articulé un premier balai d'essuie-glace (20), et un deuxième bras d'essuie-glace (16) de forme essentiellement allongée, sur lequel peut être articulé un deuxième balai d'essuie-glace (24), lesquels sont à même d'osciller entre au moins deux positions d'inversion lors du fonctionnement, des positions d'arrêt étant prévues et un balai d'essuie-glace (20, 24) étant disposé au moins partiellement, dans au moins une position d'arrêt, dans la direction perpendiculaire à une vitre (12), en dessous du bras d'essuie-glace (14, 16) de l'autre balai d'essuie-glace (24, 20),
**caractérisé en ce**
**qu'**un balai d'essuie-glace (20) est disposé, dans le sens de déplacement, devant son bras d'essuie-glace (14) associé et l'autre balai d'essuie-glace (24) est disposé derrière son bras d'essuie-glace (16) associé.

2. Dispositif d'essuie-glace (10) selon la revendication 1, **caractérisé en ce que** les au moins deux positions d'inversion forment des positions d'arrêt.

3. Dispositif d'essuie-glace (10) selon la revendication 1 ou 2, **caractérisé en ce qu'**il est prévu au moins une position de rangement qui forme au moins une position d'arrêt supplémentaire.

4. Dispositif d'essuie-glace (10) selon l'une quelconque des revendications précédentes, **caractérisé en ce que** le mouvement oscillant comporte un mouvement vers le haut et un mouvement vers le bas et **en ce que** le balai d'essuie-glace (20) situé du côté du conducteur est disposé devant le balai d'essuie-glace (24) situé du côté du passager avant lors du mouvement vers le haut.

5. Dispositif d'essuie-glace (10) selon l'une quelconque des revendications précédentes, **caractérisé en ce que** le mouvement oscillant comporte un mouvement vers le haut et un mouvement vers le bas et **en ce que** le balai d'essuie-glace (20) situé du côté du conducteur est disposé devant son bras d'essuie-glace (14) associé lors du mouvement vers le haut.

6. Dispositif d'essuie-glace (10) selon l'une quelconque des revendications précédentes, **caractérisé en ce que**, dans au moins une position d'arrêt, le premier bras d'essuie-glace (14) est disposé essentiellement en symétrie ponctuelle par rapport au deuxième bras d'essuie-glace (16).

7. Dispositif d'essuie-glace (10) selon l'une quelconque des revendications précédentes, **caractérisé en ce que** le dispositif d'essuie-glace (10) est réalisé sous forme de système antagoniste.

8. Dispositif d'essuie-glace (10) selon l'une quelconque des revendications 1 à 6, **caractérisé en ce que** le dispositif d'essuie-glace (10) est réalisé sous forme de système en tandem.

9. Dispositif d'essuie-glace (10) selon la revendication 8, **caractérisé en ce que** le système en tandem est pourvu d'une commande de course (26).
